# EUROPEAN PATENT SPECIFICATION

(11) **EP 1 398 066 B1**
(45) Date of publication and mention of the grant of the patent: **12.12.2007**
(21) Application number: 03028125.7
(22) Date of filing: 10.09.1998
(51) Int. Cl.: B01D 53/86, B01D 53/14

(54) **System for treating contaminated gas**
Verfahren zur Behandlung eines kontaminierten Gases
Procédé de traitement de gaz contaminés

(30) Priority: 10.09.1997 US 58411 P; 03.09.1998 US 146987
(43) Date of publication of application: 17.03.2004
(62) Divisional of application: 98942423.9
(73) Proprietor: PURIFICS ENVIRONMENTAL TECHNOLOGIES, INC., London, Ontario N6M 1A8 (CA)
(72) Inventor: Butters, Brian Edward, London, Ontario N6M 1A8 (CA); Powell, Anthony Leonard, London, Ontario N6H 4W2 (CA)
(74) Representative: Leske, Thomas

(56) References cited:
- PATENT ABSTRACTS OF JAPAN vol. 0060, no. 24 (C-091), 12 February 1982 (1982-02-12) & JP 56 144725 A (MITSUBISHI ELECTRIC CORP), 11 November 1981 (1981-11-11)
- PATENT ABSTRACTS OF JAPAN vol. 0040, no. 73 (C-012), 28 May 1980 (1980-05-28) & JP 55 039257 A (MITSUBISHI ELECTRIC CORP), 19 March 1980 (1980-03-19)
- WPI WORLD PATENT INFORMATION DERWENT, DERWENT, GB, vol. 35, no. 95 PA - NAT RES INST METALS PN - JP7144137 A, 1 June 1993 (1993-06-01), XP002086759

## Description

### CLAIM OF PRIORITY

The present application is a divisional application from EP 98 942 423.9 and claims priority to U. S. provisional application serial number 60/058,411, entitled "Photocatalytic Air Treatment," with named applicants Brian E. Butters and Anthony L. Powell, filed September 10, 1997.

### RELATED PATENT APPLICATIONS

The present application is related to U.S. Pat. No. 5,462,674, "Method and System for Photocatalytic Decontamination," Brian E. Butters and Anthony L. Powell inventors, issued Oct. 31, 1995; U.S. Pat. No. 5,589,078, "Advanced Filtration Technique for Fluid Purification," Brian E. Butters and Anthony L. Powell, inventors, issued Dec. 31, 1996; and U.S. Pat. No. 5,554,300, "Purification System," Brian E. Butters and Anthony L. Powell, inventors, issued Sep. 10, 1996.

### FIELD OF THE INVENTION

The present invention relates to a system for photocatalytic treatment of contaminated gas.

### BACKGROUND

Treatment systems and techniques for removing contaminants from contaminated gas have been developed in the past. Some of these treatment systems and techniques include treatments using a photocatalytic process. Common photocatalytic treatment methods typically make use of a technique by which a photocatalyst is bonded or fixed to a substrate or a fluidized bed reactor. Photocatalytic reactions are then caused by irradiating electromagnetic radiation such as ultraviolet light on the fixed photocatalyst so as to activate it. Resulting photocatalytic reactions bring about destruction of contaminants, such as volatile organic contaminants or other biologically harmful compounds that are in close proximity to the activated photocatalyst.

Several significant problems may be encountered when using known photocatalytic air treatment systems and techniques. One problem is the need to maximize "mass transfer," which is the number of collisions between contaminants and an activated photocatalyst. Photocatalytic destruction occurs only at the surface of the photocatalyst where the photocatalyst contacts the contaminants. If an insufficient level of mass transfer occurs, contaminants will pass directly through the treatment system without being subjected to the photocatalyst. Consequently, known photocatalytic air treatment systems are significantly oversized to overcome mass transfer limitations, which reduces the cost effectiveness of such systems.

Another known problem with known photocatalytic air treatment systems is fouling. Humid air streams may contain foulants that oxidize and/or collect on the surface of the photocatalyst. Coating or covering the photocatalyst with foulants therefore substantially lowers the efficiency of the photocatalyst due to a reduction in the effective surface area of the photocatalyst available for irradiation. To prevent the detrimental effects that may be brought about by fouling, the photocatalyst must be frequently cleaned or replaced. This is a time consuming and thus expensive procedure. In addition, bonding or affixing a photocatalyst to a substrate or bed reactor, and maintaining the photocatalyst immobilized, diminishes the efficiency and effectiveness of the photocatalyst. For example, the crystal structure of a photocatalyst is typically undesirably altered when a photocatalyst is heated in the course of bonding the photocatalyst to a substrate. It is also undesirable to replace an already bonded or affixed photocatalyst since such a replacement is a time consuming and expense procedure.

With known photocatalytic air treatment methods, safety issues arise when explosive ratios of contaminants exist in a given air stream. This follows since direct photocatalytic treatment can potentially ignite the explosive contaminants due to temperature elevation or the ignition source from an irradiation element.

### SUMMARY OF THE INVENTION

Therefore, a need has arisen for a system for photocatalytic treatment of contaminated gas that overcomes, among others, the aforementioned shortcomings of known photocatalytic treatment methods.

In accordance with the present invention, a system for photocatalytic treatment of contaminated gas is provided that substantially eliminate or reduce the disadvantages and problems associated with known systems and methods for photocatalytic treatment of contaminated media.

According to the present invention, a photocatalytic process operating in an liquid phase is employed to treat varying types of contaminated gases, including air. For example, pursuant to the present invention, a liquid, such as water or another suitable substance, may be used to circulate and effect the decontamination of a contaminated gas, in conjunction with a photocatalytic process. By transferring contaminating media to a liquid phase, in which they are decontaminated by a photocatalytic process, significant advantages are derived.

One aspect of the present invention is a system for treating contaminated gas. The system includes a converter such as a gas scrubber, which is used to transfer gaseous contaminants into a liquid media, such as a photocatalytic slurry. A photocatalytic system is connected to the converter and is used to oxidize and/or reduce the contaminants into non-harmful compounds using a photocatalytic reaction.

Another aspect of the present invention is a method for treating contaminated media in a single vessel. The method includes injecting a contaminated gaseous media into the vessel. A photocatalytic slurry is then added to the vessel in a manner so as to adsorb the contaminants from the contaminated gaseous media, such as by causing the catalytic slurry to flow counter current to the flow of the contaminated gas. The photocatalytic slurry with the adsorbed gaseous contaminants is then exposed to electromagnetic radiation, such as ultraviolet radiation, so that the contaminants may be reduced to non-harmful compounds.

The present invention provides many important technical advantages. One important technical advantage of the present invention is a system and method for photocatalytic treatment of contaminated gas that provides for increased mass transfer of the air phase organic contaminant and the photocatalyst, which overcomes problems associated with poor adsorption of media phase organic compounds onto the photocatalyst.

Another important technical advantage of the present invention is a system and method for photocatalytic treatment of contaminated media in which the scaling of reactors for increased air flow rates can be easily accomplished by increasing the number and size of the nozzles and the size of the reaction chamber. In this manner, air treatment systems may be readily implemented that can treat volumes of air of up to hundreds of thousands of cubic feet per minute.

Another important technical advantage of the present invention is a system and method for photocatalytic treatment of contaminated media that allows irreversible electron acceptors, such as hydrogen peroxide, to be added to a photocatalytic slurry containing the contaminated media in order to increase reaction kinetics and thus reduce equipment size. This method allows organic pollutants to be treated in a nitrogen environment, such as under nitrogen blankets in process tanks, where oxidants can be added to the photocatalytic slurry without creating an explosion hazard.

Another important technical advantage of the present invention is a system and method for photocatalytic treatment of contaminated media in which the photocatalyst is mobilized and can be changed in-process, such as by draining the used photocatalytic slurry and adding unused photocatalytic slurry. In this manner, the treatment may be conducted continuously without requiring periodic shutdowns for replacement of photocatalyst elements.

Another important technical advantage of the present invention is a system and method for photocatalytic treatment of contaminated media in which the photocatalytic assemblies are not subject to inorganic fouling with substances, such as iron and calcium. The present invention utilizes a distributed photocatalytic element that is resistant to inorganic fouling.

Another important technical advantage of the present invention is a system and method for photocatalytic treatment of contaminated air that does not require control of the humidity level of the treated air. Yet another important technical advantage of the present invention is a system and method for photocatalytic treatment of contaminated media that utilizes a closed loop system that requires no continuous addition of liquid media or air.

Another important technical advantage of the present invention is a system and method for photocatalytic treatment of contaminated air that may be used to safely treat explosives (for example, nitroglycerine) or flammable contaminants in the aqueous phase rather than the air phase. In this manner, inadvertent explosion or ignition may be avoided.

### BRIEF DESCRIPTION OF THE DRAWINGS

The accompanying drawings illustrate a preferred embodiment of the present invention wherein like reference numerals represent like parts, in which:
FIG. 1 is a block diagram of a system for treating airborne contaminants in accordance with a first preferred embodiment of the present invention;
FIG. 2 is a schematic diagram of a treatment system in accordance with a second preferred embodiment of the present invention;
FIG. 3 is a flow chart of a method for treating contaminated gas in accordance with the embodiment of Fig. 1;
FIG. 4 is a flow chart of a method for treating contaminated gas in accordance with the embodiment of Fig. 2;

### DETAILED DESCRIPTION OF THE DRAWINGS

The following description, with reference to the accompanying drawings, details preferred embodiments of the present invention.

The present invention relates to the treatment of contaminated gas by the use of a photocatalytic slurry-based photocatalytic treatment system. More specifically, the present invention provides for the transfer of organic contaminants from a gas phase into an liquid phase, and the subsequent treatment of such contaminants by utilization of a photocatalytic slurry that preferably includes a photocatalyst, such as TiO2, suspended freely in an aqueous phase. Placing the contaminants in an aqueous phase in which the photocatalyst is suspended in a photocatalytic slurry overcomes mass transfer problems by increasing the frequency of collisions between contaminants and photocatalyst particles. The present invention also provides for the pH of the aqueous stream of contaminants to be regulated so that foulants may, among other things, be substantially precluded from adhering to the surfaces of photocatalystic particles included in the photocatalytic slurry. Accordingly, the present invention provides for an improved technique by which contaminants are efficiently destroyed by utilizing a photocatalytic system operating in an aqueous mode.

Airborne organic contaminants can be readily scrubbed into the aqueous phase, with sufficient water surface area to gas volume ratios. An air scrubber may comprise a packed bed column in which water or another suitable liquid is allowed to flow down the bed while contaminated air is introduced at the bottom such that phase transfer occurs. Also or alternatively, a nozzle may be used to spray water as fine particles into a chamber containing the contaminated gas, so as to increase the surface area to volume ratios. Using water that is free of organic contaminants will improve air scrubber efficiency, such that effluent water retrieved from the treatment system should be purified of organic contaminants before it can be reused for additional scrubbing.

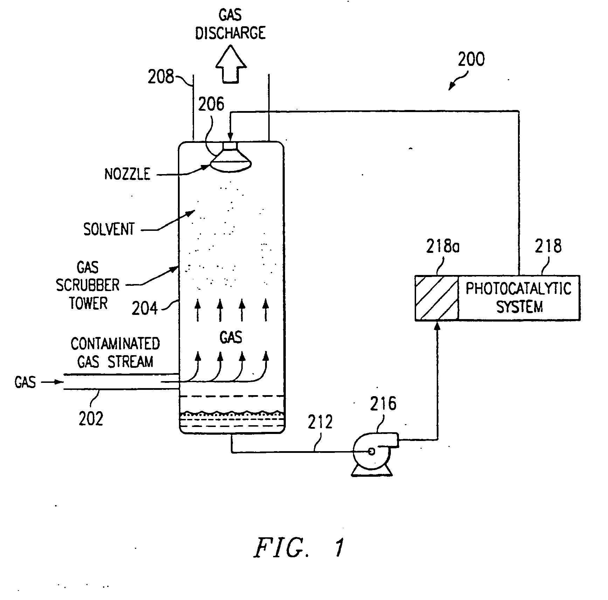

**FIGURE 1** is a block diagram of a system 200 for treating airborne contaminants in accordance with a preferred embodiment of the present invention. System 200 is used to transfer gaseous contaminants into the aqueous phase. Preferably, system 200 is used to treat airborne contaminants using water as a scrubbing solvent in a closed loop system, thus eliminating harmful emissions during treatment of the airborne contaminants. Other solvents and contaminated media may also or alternatively be decontaminated, as previously described.

A contaminated gas stream such as air having airborne contaminants is transferred by pipe 202 into a gas scrubber tower 204, which is a converter where the contaminants are converted or transferred from the gaseous phase into an aqueous phase. At the top of gas scrubber tower 204 is a nozzle 206 that downwardly disperses a solvent such as water, photocatalytic slurry, or another suitable liquid into gas scrubbing tower 204. The atomized molecules of the liquid may be passed to gas scrubber tower 204 through solvent supply lines 212 by, for example, a pump (not illustrated). The contaminated air stream, which is directed upwards through gas scrubber tower 204, therefore encounters the downward moving solvent within gas scrubber tower 204. The contaminants, such as volatile organic compounds or other contaminants, are then transferred from the gaseous phase to the aqueous phase such as by adsorption or absorption and travel downward to the bottom of gas scrubber tower 204. The contaminants, in aqueous phase with the water, photocatalytic slurry or other liquid, are then directed to a photocatalytic system 218 by pump 216. Photocatalytic system 218 is preferably configured to operate in an aqueous mode. Gas that is substantially free of contaminants is discharged through the top of gas scrubbing tower 204 through gas discharge 208. This gas may also be used in a closed loop system. Although one gas scrubber tower 204 is shown, two or more gas scrubber towers 204 may be used, with each being sized so as to obtain the level of contaminant removal treatment that is required to remove contaminants from the contaminated gas stream. The additional gas scrubber towers 204 may also be connected in series so as to decrease the level of contaminants to a predetermined acceptable level where the level of contaminants may vary over a wide range, thus allowing stages of the gas scrubber system to be shut off when not needed so as to conserve energy.

Aqueous phase contaminants are preferably passed to aqueous photocatalytic system 218 by pump 216. Such contaminants may, for example, be stored in a supply tank (not illustrated) before being passed to aqueous photocatalytic system 218. Aqueous photocatalytic system 218 is operable to treat such contaminants so as to oxidize or otherwise reduce the contaminants into non-harmful materials. By way of example but not limitation, a suitable aqueous photocatalytic system 218 that may be used to remove contaminants is the slurry-based photocatalytic system disclosed in U.S. Pat. No. 5,462,674, "Method and System for Photocatalytic Decontamination," Brian E. Butters and Anthony L. Powell inventors, issued Oct. 31, 1995, and U.S. Pat. No. 5,589,078, "Advanced Filtration Technique for Fluid Purification," Brian E. Butters and Anthony L. Powell, inventors, issued Dec. 31, 1996, each of which are hereby incorporated by reference for all purposes. However, other suitable photocatalytic systems, such as, for example, those disclosed in U.S. Pat. Nos. 5,118,422 and 5,174,877 issued to Cooper et al., may also be employed within the spirit and scope of the present invention. Aqueous photocatalytic system 218 may include a cleaning subsystem 218a that is operable to remove the oxidation and reduction by-products from the condensate and/or solvent, such as by ion exchange, reverse osmosis, distillation, or other suitable methods.

Aqueous photocatalytic system 218 is sized so as to oxidize or reduce contaminants, such as organic contaminants, at a rate that is faster than the rate at which they are introduced through gas scrubber tower 204.

The gas scrubber system and method shown and embodied in system 200 provides various advantages. First, the destruction of contaminants in the aqueous phase helps to minimize the level of contaminants in the solvent provided to gas scrubber tower 204 while maintaining system 200 as a closed loop system, such that no additional solvent is required to be added other than to compensate for evaporation, spills, leaks, and other inadvertent losses. Second, explosives such as nitroglycerine and flammable contaminants may be safely treated in the aqueous phase without incurring the hazards that would be posed by treatment of such contaminants in the air phase.

System 200 may be used to reduce or oxidize contaminants on-site where they are created, which eliminates the costs, liabilities, and potential for damages that may be associated with the handling and transport of airborne organic contaminants. If a slurry-based aqueous photocatalytic system is used to treat the contaminants, any salts that may be generated by the destruction of various contaminants will have little or no impact on the performance of the photocatalytic slurry-based treatment system.

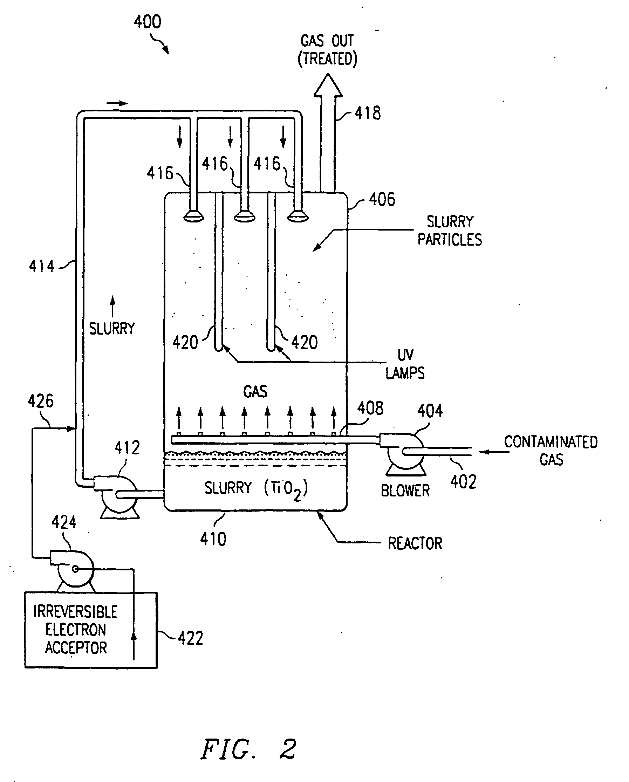

**FIGURE 2** is a schematic diagram of treatment system 400 in accordance with a second preferred embodiment of the present invention. Treatment system 400 includes reactor 406 which has a header 416 that is configured to inject photocatalytic slurry into reactor 406. For example, header 416 may have multiple nozzles or other injection devices at the top of the reactor to disperse low micron and/or sub-micron solvent particles containing a photocatalytic compound or compounds downward into reactor 406, or may inject photocatalytic slurry in liquid phase into reactor 406. Reactor 406 further includes one or more radiation-emitting devices 420 such as ultraviolet lamps, which may be disposed near the top of the reactor. Air intake header 408 is provided at the bottom of reactor 406, and is used to direct a contaminated gas stream from gas intake 402 and blower 404 in an upward direction within reactor 406.

Treatment system 400 preferably utilizes atomization of a solvent-based photocatalytic slurry, such as TiO2 dissolved in water. Atomization may be accomplished by several methods, such as by the use of a header 416 having nozzle configured for atomization, or by the use of acoustic energy or other suitable systems or methods. According to one aspect of the present invention, one or more photocatalyst compounds are added to a closed loop water supply to form a photocatalytic slurry 410. Pump 412 is used to move photocatalytic slurry 410 though photocatalytic slurry feed line 414 to header 416, such as those used in an air scrubber. Inside reactor 406, an arrangement of radiation-emitting devices 420 such as ultraviolet lamps are provided in order to supply the required energy to promote photocatalysis. The radiation-emitting devices are arranged so as to maximize the irradiation of the photocatalytic slurry flow field within reactor 406. Treatment system 400 thus combines the process of transferring contaminants into an aqueous phase, such as by adsorption, and the process of photocatalysis, such as with a photocatalytic slurry, within a single reactor such that they are undertaken virtually contemporaneously.

The contaminated gas, such as air, is preferably transferred through reactor 406 in a direction counter-current to the photocatalytic slurry, in order to increase the Reynolds Number of the photocatalytic slurry and thus the mixing or mass transfer. The contaminated gas will contact the photocatalytic slurry as a function of the Reynolds Number. The rate at which the contaminants, such as volatile organic compounds, are reduced or oxidized is likewise a function of the Reynolds Number. After treatment, the air that has been treated for removal of contaminants is discharged through vent 418, and the photocatalytic slurry 410 is re-circulated by pump 412 and photocatalytic slurry feed line 414 for continuing use. The discharged air may be treated with additional reactor stages in order to reduce the level of contaminants to a predetermined acceptable level, if necessary, but a single reactor stage is preferably used. Reactor 406 thus operates to transfer gaseous contaminants to the liquid phase, and to convert contaminants into harmless compounds by aqueous photocatalysis.

Treatment system 400 provides many important technical advantages. One important technical advantage is that mass transfer between the gaseous phase contaminants and the photocatalytic slurry is greatly increased. Scaling of reactor 406 for increased air flow rates can also be easily accomplished by increasing the size of the air intake header 408, the number of nozzles 409, and the size of reactor 406. This advantage allows for treatment of air flow rates in excess of one hundred thousand cubic feet per minute.

The present invention also provides effective aeration for the photocatalytic oxidation. A conditioner such as an irreversible electron acceptors, for example, hydrogen peroxide, may likewise be added to the photocatalytic slurry from an electron acceptor tank 422 into photocatalytic slurry feed line 414, using a pump 424 and supply line 426. The conditioners may include compounds that are used to improve the interaction between the contaminants and the photocatalytic slurry, such as an oxidant, nutrients, surfactants, or other suitable compounds. Organic pollutants may thus be treated in pure nitrogen, such as by treating the contaminated gas with photocatalytic slurry while using a nitrogen blanket in the process tanks, as an oxidant or oxidants in the form of irreversible electron acceptors can be added directly to the photocatalytic slurry.

Treatment system 400 includes a mobilized photocatalytic slurry that can be changed out in-process or during a brief outage, as suitable. The photocatalytic slurry used in treatment system 400 is not subject to inorganic fouling with substances such as iron and calcium. The irradiation devices 420, such as ultraviolet lamps, may be replaced in-service thus allowing the system to remain in operation while the irradiation devices 420 are being serviced. Furthermore, treatment system 400 has no humidity factor requirements that must be controlled, as the photocatalytic reaction occurs in an aqueous solution. This feature eliminates the need for controlling the temperature of the air stream to obtain a desired humidity level. These advantages result in less equipment, hardware, control systems, power systems, instrumentation systems, and other systems and components than in known contaminant reduction systems.

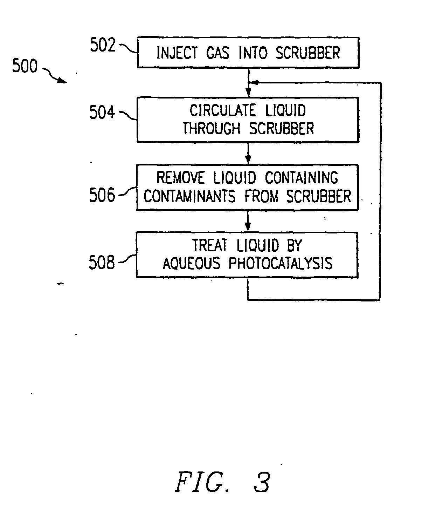

**FIGURE 3** is a flow chart of a method 500 for treating contaminated gas in accordance with the embodiment of Fig. 1 of the present invention. Method 500 begins at step 502, in which a gas that carries or includes contaminants, such as volatile organic compounds, is injected into a gas scrubber. The gas may be air that has been collected from an area in which volatile organic compounds are being used, air that includes combustion gases from a waste burning process, or other suitable gases that include contaminants. The gas may be injected by a suitable method, such as by injecting through a header of nozzles into a liquid, gas, aerosol, permeable solid material, or other suitable materials.

After the gas injection into the scrubber is initiated, the method proceeds to step 504, where a liquid is circulated through the scrubber. The liquid may be water or other suitable solvents that are used to adsorb or dissolve gaseous contaminants. The liquid may be circulated through the scrubber by injecting the liquid through a header of jet nozzles so as to form an aerosol with subsequent collection at a gravity collection point, by circulating the liquid in liquid phase, or by other suitable methods. The method then proceeds to step 506.

At step 506, the liquid containing adsorbed contaminants is removed from the scrubber, and the gas that has been cleaned of contaminants is discharged from the scrubber. Preferably, if the gas used is air, then the level of contaminants remaining in the discharged gas is low enough that the air may be discharged directly to the environment or re-used. If the predetermined level of contaminant concentration has not been reached, then the discharged gas may be fed back into another gas scrubber unit for subsequent contaminant removal. The liquid containing contaminants may be removed by collection at a gravity collection point, such as where aerosol particles of liquid may accumulate, and may then be transferred to a holding tank for subsequent treatment. Likewise, if the liquid is circulated in liquid phase through the scrubber, it may be collected and pumped out of the scrubber. The liquid is then treated by with aqueous photocatalysis at step 508, such as by transferring the liquid from the holding tank to a slurry-based aqueous photocatalytic system.

Method 500 is a continuous treatment process, such that steps 502 through 508 continue after being initiated. Furthermore, the order of steps shown is exemplary, and the steps may be initiated in a suitable manner. For example, circulation of liquid through the scrubber may be initiated prior to injection of gas, or other method steps may be interchanged as suitable.

Method 500 may thus be used to treat contaminants by removing them from a gaseous phase using a gas scrubber and a liquid or aerosol solvent, and by then reducing them using a photocatalytic treatment system. The contaminants may be gaseous or may be converted to a gaseous phase from a liquid or solid phase, such as by burning or heating. Multiple gas scrubber stages may be used to reduce the level of contaminants to a predetermined level. In this manner, the present invention provides a modular and expandable method for treating contaminants that may be used where the contaminants are created, in order to reduce the cost and complexity of the contaminant treatment process.

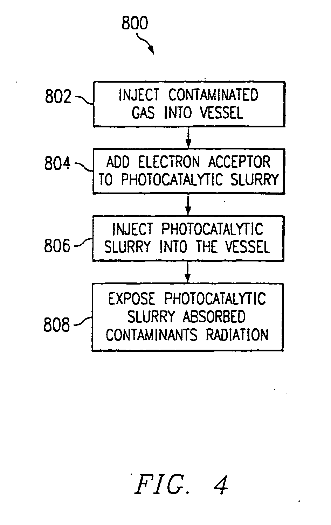

**FIGURE 4** is a flow chart of a method 800 for treating contaminated media in accordance with the embodiment of Fig. 2 of the present invention. Method 800 may be used to treat contaminated media with a photocatalytic slurry in a single vessel. Method 800 begins at step 802, where gas bearing contaminants is injected into the vessel. For example, the gas may be injected using a header with gas nozzles, the vessel may be flooded with photocatalytic slurry and the gas may be injected through a screen to create micro-bubbles, or other suitable methods may be used. Any water to air ratio may be used. The method then proceeds to step 804, where an electron acceptor such as hydrogen peroxide is added to a photocatalytic slurry. Step 804 may be omitted, but typically improves the effectiveness of the photocatalytic process. The method then proceeds to step 806.

At step 806, the photocatalytic slurry is injected into the vessel. For example, the photocatalytic slurry may be injected by spraying the photocatalytic slurry through a header of nozzles to create a micron or sub-micron aerosol mist, the photocatalytic slurry may be pumped into the vessel in liquid phase, or other suitable methods may be used to inject the photocatalytic slurry into the vessel. The injected photocatalytic slurry and the injected gas bearing contaminants then interact and the contaminants are transferred from the gas to the photocatalytic slurry, such as by adsorption. The method then proceeds to step 808, where the photocatalytic slurry bearing contaminants is exposed to radiation, such as ultra-violet radiation or other suitable radiation that will cause a photocatalytic oxidation and/or reduction of the contaminants to occur. The photocatalytic slurry may then be removed for subsequent treatment of contaminants (if required), and the cleaned gas is vented from the vessel. If the level of contaminants in the gas has not dropped to a predetermined acceptable level, then the gas may be fed into one or more additional stages for additional decontamination.

## Claims

1. A system for removing contaminants from a contaminated gaseous stream, the system comprising:
a decontamination tank (406);
solvent supply lines (414) for providing solvent to the decontamination tank (406);
a nozzle-(416) connected to the solvent supply lines (414) and positioned at the top of the decontamination tank (406), the nozzle (416) operable to downwardly disperse the solvent into the tank (406);
a gaseous stream passage (408) for passing a contaminated gaseous stream through the tank (406), whereby the contaminated gaseous stream is directed upwardly through the downwardly dispersed solvent, whereby contaminants are transferred from a gaseous phase to an aqueous phase and thereupon travel downward to the bottom of the tank (406);
a photocatalytic slurry (410) positioned in the tank (406) to receive the aqueous phase contaminants; and
a decontamination system (420) operable to remove the aqueous phase contaminants from the slurry (410).

2. A system according to claim 1, wherein the slurry (410) comprises TiO₂ and water.

3. A system according to claim 1, wherein the slurry (410) is provided to the decontamination tank (406) through the nozzle (416) as a part of the solvent.

4. A system according to claim 3, wherein the slurry (410) is atomized by the nozzle (416).

5. A system according to claim 1, wherein the decontamination system (420) comprises radiation emitting devices (420) in the decontamination tank (406) to react with the slurry (410) to promote photocatalysis.

6. A system according to claim 5, wherein the radiation emitting devices (420) are ultraviolet lamps (420).

7. A system according to claim 1, further comprising a gas discharge port (418) in the decontamination tank (406) for discharging contaminant-free gaseous media.

8. A system according to claim 1, wherein the decontamination tank (406) is a gas scrubber tower (406).

9. A system according to claim 1, wherein the system is a closed-loop system.

10. A system according to claim 1, further comprising a conditioner (422) added to the slurry to improve interaction between the slurry (410) and the contaminants during decontamination.

11. A system according to claim 10, wherein the conditioner (422) is an irreversible electron acceptor (422).

12. A system according to claim 11, wherein the irreversible electron acceptor (422) is hydrogen peroxide.

13. A system according to claim 10, wherein the conditioner (422) comprises compounds selected from the group consisting of an oxidant, nutrients, and surfactants.

14. A system according to claim 1, wherein the decontamination system (420) comprises a photocatalytic decontamination system (218).

15. A system according to claim 14, wherein the solvent is water and the photocatalytic decontamination system (218) operates in an aqueous mode.

16. A system according to claim 14, wherein the photocatalytic decontamination system (218) is sized to treat contaminants at a rate that is faster than a rate at which contaminants are introduced into the gas scrubber tower (204).

17. A system according to claim 14, wherein the slurry is a photocatalytic slurry.

18. A system according to claim 14, wherein the photocatalytic decontamination system (218) is external to the decontamination tank (204) and the slurry is received from the photocatalytic decontamination system (218).

19. A system according to claim 14, wherein the system is a closed-loop system.

## Patentansprüche

1. System zum Entfernen von Kontaminationen aus einem kontaminierten Gasstrom, umfassend:
einen Dekontaminationstank (406),
Lösungsmittelzuführleitungen (414), um dem Dekontaminationstank (406) Lösungsmittel bereitzustellen,
eine mit den Lösungsmittelzuführleitungen (414) verbundene und an der Oberseite des Dekontaminationstanks (406) positionierte Düse (416), wobei die Düse (416) operativ ist um das Lösungsmittel nach unten in den Tank (406) zu dispergieren,
eine Gasstrompassage (408), um einen kontaminierten Gasstrom durch den Tank (406) zu führen, wobei der kontaminierte Gasstrom nach oben durch das nach unten dispergierte Lösungsmittel gelenkt wird, wobei Kontaminationen von einer gasförmigen Phase zu einer wässrigen Phase transferiert werden und daraufhin nach unten zur Unterseite des Tanks (406) wandern,
eine in dem Tank (406) positionierte photokatalytische Aufschlämmung (410) zur Aufnahme der Kontaminationen der wässrigen Phase, und
ein Dekontaminationssystem (420), welches operativ ist um die Kontaminationen der wässrigen Phase aus der Aufschlämmung (410) zu entfernen.

2. System nach Anspruch 1, wobei die Aufschlämmung (410) TiO₂ und Wasser umfasst.

3. System nach Anspruch 1, wobei die Aufschlämmung (410) dem Dekontaminationstank (406) durch die Düse (416) als ein Bestandteil des Lösungsmittels bereitgestellt wird.

4. System nach Anspruch 3, wobei die Aufschlämmung (410) von der Düse (416) zerstäubt wird.

5. System nach Anspruch 1, wobei das Dekontaminationssystem (420) strahlungsemittierende Vorrichtungen (420) in dem Dekontaminationstank (406) umfasst, um mit der Aufschlämmung (410) zu reagieren, um Photokatalyse zu fördern.

6. System nach Anspruch 5, wobei die strahlungsemittierenden Vorrichtungen (420) Ultraviolettlampen (420) sind.

7. System nach Anspruch 1, des Weiteren umfassend eine Gasauslassöffnung (418) in dem Dekontaminationstank (406), um von Kontaminationen freies gasförmiges Medium auszutragen.

8. System nach Anspruch 1, wobei der Dekontaminationstank (406) ein Gaswaschturm (406) ist.

9. System nach Anspruch 1, wobei das System ein geschlossenes Regelsystem ist.

10. System nach Anspruch 1, des Weiteren umfassend einen Zusatzstoff (422), welcher der Aufschlämmung zugegeben ist, um eine Wechselwirkung zwischen der Aufschlämmung (410) und den Kontaminationen während der Dekontamination zu verbessern.

11. System nach Anspruch 10, wobei der Zusatzstoff (422) ein irreversibler Elektronenakzeptor (422) ist.

12. System nach Anspruch 11, wobei der irreversible Elektronenakzeptor (422) Wasserstoffperoxid ist.

13. System nach Anspruch 10, wobei der Zusatzstoff (422) Verbindungen umfasst, ausgewählt aus der Gruppe, bestehend aus einem Oxidationsmittel, Nährstoffen und oberflächenaktiven Mitteln.

14. System nach Anspruch 1, wobei das Dekontaminationssystem (420) ein photokatalytisches Dekontaminationssystem (218) umfasst.

15. System nach Anspruch 14, wobei das Lösungsmittel Wasser ist und das photokatalytische Dekontaminationssystem (218) in einem wässrigen Modus arbeitet.

16. System nach Anspruch 14, wobei das photokatalytische Dekontaminationssystem (218) derart bemessen ist, so dass Kontaminationen in einer Geschwindigkeit behandelt werden, welche schneller ist als eine Geschwindigkeit, mit der Kontaminationen in den Gaswaschturm (204) eingebracht werden.

17. System nach Anspruch 14, wobei die Aufschlämmung eine photokatalytische Aufschlämmung ist.

18. System nach Anspruch 14, wobei das photokatalytische Dekontaminationssystem (218) außerhalb des Dekontaminationstanks (204) ist und die Aufschlämmung von dem photokatalytischen Dekontaminationssystem (218) aufgenommen wird.

19. System nach Anspruch 14, wobei das System ein geschlossenes Regelsystem ist.

## Revendications

1. Système de retrait de contaminants d'un courant gazeux contaminé, le système comprenant:
une cuve de décontamination (406) ;
des lignes d'alimentation en solvant (414) pour introduire un solvant dans la cuve de décontamination (406);
une buse (416) reliée aux lignes d'alimentation en solvant (414) et positionnée au sommet de la cuve de décontamination (406), la buse (416) étant utilisable pour disperser vers le bas le solvant dans la cuve (406);
un passage de courant gazeux (408) pour faire passer un courant gazeux contaminé à travers la cuve (406), le courant gazeux contaminé étant dirigé vers le haut à travers le solvant dispersé vers le bas, d'où il résulte que les contaminants sont transférés d'une phase gazeuse à une phase aqueuse et tombent de ce fait vers le fond de la cuve (406) ;
une suspension photocatalytique (410) positionnée dans la cuve (406) pour recevoir les contaminants en phase aqueuse ; et
un système de décontamination (420) utilisable pour retirer les contaminants en phase aqueuse de la suspension (410).

2. Système selon la revendication 1, dans lequel la suspension (410) comprend du TiO₂ et de l'eau.

3. Système selon la revendication 1, dans lequel la suspension (410) est introduite dans la cuve de décontamination (406) par la buse (416) comme une partie du solvant.

4. Système selon la revendication 3, dans lequel la suspension (410) est atomisée par la buse (416).

5. Système selon la revendication 1, dans lequel le système de décontamination (420) comprend des dispositifs émettant un rayonnement (420) dans la cuve de décontamination (406) pour réagir avec la suspension (410) afin de favoriser la photocatalyse.

6. Système selon la revendication 5, dans lequel les dispositifs émettant un rayonnement (420) sont des lampes à ultraviolets (420).

7. Système selon la revendication 1, comprenant en outre un orifice d'évacuation de gaz (418) dans la cuve de décontamination (406) pour évacuer le milieu gazeux débarrassé des contaminants.

8. Système selon la revendication 1, dans lequel la cuve de décontamination (406) est une colonne de lavage de gaz (406).

9. Système selon la revendication 1, le système étant un système en boucle fermée.

10. Système selon la revendication 1, comprenant en outre un conditionneur (422) ajouté à la suspension pour améliorer l'interaction entre la suspension (410) et les contaminants lors de la décontamination.

11. Système selon la revendication 10, dans lequel le conditionneur (422) est un accepteur d'électrons irréversible (422).

12. Système selon la revendication 11, dans lequel l'accepteur d'électrons irréversible (422) est le peroxyde d'hydrogène.

13. Système selon la revendication 10, dans lequel le conditionneur (422) comprend des composés choisis dans le groupe constitué par un oxydant, des nutriments et des tensioactifs.

14. Système selon la revendication 1, dans lequel le système de décontamination (420) comprend un système de décontamination photocatalytique (218).

15. Système selon la revendication 14, dans lequel le solvant est l'eau et le système de décontamination photocatalytique (218) fonctionne dans un mode aqueux.

16. Système selon la revendication 14, dans lequel le système de décontamination photocatalytique (218) est dimensionné pour traiter des contaminants à une vitesse qui est plus rapide que la vitesse à laquelle les contaminants sont introduits dans la colonne de lavage de gaz (204).

17. Système selon la revendication 14, dans lequel la suspension est une suspension photocatalytique.

18. Système selon la revendication 14, dans lequel le système de décontamination photocatalytique (218) est externe à la cuve de décontamination (204) et la suspension est reçue à partir du système de décontamination photocatalytique (218).

19. Système selon la revendication 14, le système étant un système en boucle fermée.
